# EUROPÄISCHE PATENTSCHRIFT

(11) **EP 4 165 701 B1**
(45) Veröffentlichungstag und Bekanntmachung des Hinweises auf die Patenterteilung: **29.05.2024**
(21) Anmeldenummer: 21732851.7
(22) Anmeldetag: 09.06.2021
(51) Int. Cl.: H01M 4/88

(54) **VERFAHREN ZUR BEREITSTELLUNG EINER GEREINIGTEN GASDIFFUSIONSLAGE FÜR ELEKTROCHEMISCHE ANWENDUNGEN**
METHOD FOR PROVIDING A CLEANED GAS DIFFUSION LAYER FOR ELECTROCHEMICAL APPLIANCES
PROCÉDÉ POUR PRÉPARER UNE COUCHE DE DIFFUSION DE GAZ NETTOYÉE POUR DES APPLICATIONS ELECTROCHIMIQUES

(30) Priorität: 12.06.2020 DE 102020115623
(43) Veröffentlichungstag der Anmeldung: 19.04.2023
(73) Patentinhaber: Greenerity GmbH, 63755 Alzenau (DE)
(72) Erfinder: BANGEL, Dieter, 35625 Hüttenberg (DE); LEERATANAPHANIT, Sarayut, 63067 Offenbach am Main (DE); SUCHSLAND, Jens-Peter, 63755 Alzenau (DE)
(74) Vertreter: Hoefer & Partner Patentanwälte mbB
(86) Internationale Anmeldenummer: PCT/EP2021/065511
(87) Internationale Veröffentlichungsnummer: WO 2021/250121

(56) Entgegenhaltungen:
- JP-A- 2010 070 433
- US-A1- 2016 329 591
- US-A1- 2019 006 682
- US-A1- 2019 344 405

## Beschreibung

Die Erfindung betrifft ein Verfahren zur Bereitstellung einer von beiden Seiten gereinigten Gasdiffusionslage für elektrochemische Anwendungen.

Membranelektrodeneinheiten (MEA) für elektrochemische Anwendungen, wie z.B. Brennstoffzellen, Wasserelektrolysezellen, elektrochemische Kompressoren oder elektrochemische Sensoranwendungen, umfassen neben einer aus Anode, Kathode und einer protonenleitfähigen Membran bestehenden katalysatorbeschichteten Membran (CCM) Gasdiffusionslagen (GDL), deren Aufgabe es ist, zum einen eine gute elektrische Kontaktierung zwischen CCM und Bipolarplatten sicherzustellen, zum anderen einen guten Brennstofftransport zur Anode, bzw. einen guten Sauerstofftransport zur Kathode sicherzustellen. Weiterhin hat die Gasdiffusionslage einen Einfluss auf den Wasserhaushalt der MEA. Gasdiffusionslagen sind üblicherweise aus einer mikroporösen Schicht (engl. microporous layer, MPL) und einem makroporösen Trägermaterial aufgebaut, wobei zumindest das makroporöse Trägermaterial ein Fasermaterial umfasst.

Beim Zuschnitt von GDL in das gewünschte Format, kann ein Abbrechen von Fasern auftreten. Solche Fasern können zu einer Penetration der CCM und somit zu einem chemischen Kurzschluss (Gasübertritt zwischen Anode und Kathode) sowie zu einem elektrischen Kurzschluss führen. Chemischer und elektrischer Kurzschluss führen zu einer lokalen Hitzeentwicklung und schädigen somit die CCM, wodurch eine verkürzte Lebenszeit bis hin zu einem Totalausfall auftreten kann.

Es ist eine Aufgabe der Erfindung ein Verfahren zur Bereitstellung einer von beiden Seiten gereinigten Gasdiffusionslage für elektrochemische Anwendungen anzugeben, das einfach und zuverlässig ist und Kontaminationen der Gasdiffusionslage, insbesondere mit gebrochenen Fasern, vollständig entfernt. JP 2010 070433 offenbart ein Verfahren zur Bereitstellung einer gereinigten Gasdiffusionslage bei dem beide Seiten einer Gasdiffusionslage (GDL) gereinigt werden. Die GDL wird dabei direkt über eine Rolle transportiert und von beiden Seiten zugleich gereinigt.

Die Lösung dieser Aufgabe erfolgt durch das Verfahren gemäß Anspruch 1. Die Unteransprüche haben Ausgestaltungen und vorteilhafte Weiterbildungen der Erfindung zum Inhalt.

Demnach wird die Aufgabe gelöst durch ein Verfahren zur Bereitstellung einer gereinigten Gasdiffusionslage für elektrochemische Anwendungen, das zunächst ein Bereitstellen einer Gasdiffusionslage umfasst. Unter einer Gasdiffusionslage (im Folgenden: GDL) wird ein Element verstanden, das insbesondere eine mikroporöse Schicht und ein makroporöses Trägermaterial umfasst, wobei die durchschnittliche Gesamtdicke der GDL vorzugsweise in einem Bereich von 100 µm bis 300 µm liegt und das Trägermaterial vorzugsweise vom Vlies-Typ oder Papier-Typ ist und mindestens ein Fasermaterial umfasst. Die GDL findet insbesondere Anwendung in Brennstoffzellen, Wasserelektrolysezellen, elektrochemischen Kompressoren und elektrochemischen Sensoranwendungen.

Gemäß dem erfindungsgemäßen Verfahren wird die Gasdiffusionslage dabei derart bereitgestellt, dass eine erste Seite der Gasdiffusionslage auf einem ersten Vakuumtransportband angeordnet wird. Die GDL kann dabei z.B. als Blattware bereitgestellt werden, beispielsweise manuell oder durch einen Roboter aus einer Bevorratungsvorrichtung. Das Vakuumtransportband ist im Wesentlichen nicht beschränkt und kann beispielsweise aus einem metallischen Material, einem elastomeren Material oder einem polymeren Material gebildet sein, und verfügt insbesondere über Löcher, über die das Vakuum bzw. ein vordefinierter Unterdruck an die auf dem ersten Vakuumtransportband angeordnete GDL angelegt wird. Der Durchmesser der Löcher ist dabei vorzugsweise kleiner als 4 mm, weiter vorzugsweise kleiner als 2 mm und weiter bevorzugt kleiner als 1 mm, und die Anzahl der Löcher pro Fläche ist dabei insbesondere homogen verteilt oder nimmt von innen nach außen ab.

Die mit der ersten Seite auf dem ersten Vakuumtransportband angeordnete GDL weist eine gegenüberliegende, freiliegende zweite Seite auf, die in einem weiteren Verfahrensschritt gereinigt wird. Hierbei kann die GDL stationär auf dem ersten Vakuumtransportband liegen, wird aber vorzugsweise entlang des ersten Vakuumtransportbands weiter transportiert, so dass das Reinigen in einem kontinuierlichen Prozess ablaufen kann.

Insbesondere wird die GDL auf dem ersten Vakuumtransportband zu einem Übergabebereich transportiert, den die GDL in einem Zustand erreicht, in dem die freiliegende zweite Seite der GDL gereinigt und insbesondere von abgebrochenen Fasern oder Faserresten befreit ist. Der Übergabebereich ist ein Bereich, in dem das erste Vakuumtransportband und ein dem ersten Vakuumtransportband teilweise gegenüberliegendes zweites Vakuumtransportband einen Überlappungsbereich in Förderrichtung des ersten Vakuumtransportbands aufweisen. Es erfolgt somit eine direkte, in vertikaler Richtung gesehene Übergabe der GDL vom ersten Vakuumtransportband an das zweite Vakuumtransportband. Mit anderen Worten wird die GDL im Übergabebereich zwischen dem ersten Vakuumtransportband und dem zweiten Vakuumtransportband geführt. Im Übergabebereich erfolgt ein Übergeben der teilgereinigten GDL, also der GDL, deren zweite Seite gereinigt ist, vom ersten Vakuumtransportband an das darüber- oder darunterliegende zweite Vakuumtransportband, und zwar so, dass nun die erste Seite der Gasdiffusionslage frei liegt und die gereinigte zweite Seite der GDL mit dem zweiten Vakuumtransportband in Kontakt steht. Die erste Seite der GDL war bislang auf dem ersten Vakuumtransportband angeordnet, liegt aber nun, da die GDL an das zweite Vakuumtransportband übergeben wurde, frei und wird anschließend z.B. analog der zweiten Seite, gereinigt. Hierzu kann die GDL am zweiten Vakuumtransportband weiter transportiert werden.

Das erfindungsgemäße Verfahren ermöglicht das Reinigen einer GDL von beiden Seiten in einer kontinuierlichen und sehr schnellen Verfahrensführung ohne die GDL zu drehen und ist dadurch besonders effizient und kostengünstig. Gleichzeitig ermöglicht das Verfahren ein sicheres und zuverlässiges Handhaben der GDL, wodurch GDL in besonders guter Qualität, d.h. mit zuverlässiger Reinigung und ohne Beschädigung, erhalten werden. Das erfindungsgemäße Verfahren ermöglicht dabei insbesondere die Übergabe der GDL ohne die GDL von der einen Seite auf die andere Seite zu drehen oder mittels eines Greifers umzusetzen und ist dadurch besonders schonend.

Gemäß einer vorteilhaften Weiterbildung liegen die zu reinigenden GDL als Rohmaterial-Gasdiffusionslagen in Form einer Rollenware vor, die vor dem Reinigen zu GDL vereinzelt werden, beispielsweise durch Schneiden, Stanzen und dergleichen. Die vereinzelten GDL werden dann dem ersten Vakuumtransportband zugeführt. Zum Vereinzeln wird die Rollenware-GDL von der Rolle vorzugsweise abschnittsweise abgerollt und sodann zu GDL vereinzelt.

Insbesondere wird das Reinigen als kontaktloses Reinigen ausgeführt, vorzugsweise indem zum Reinigen ein Luftstrom an die zu reinigende Seite der GDL geführt wird, wobei der Luftstrom insbesondere ionisiert ist, um mögliche elektrostatisch anhaftende Verunreinigungen effektiver von der zu reinigenden Oberfläche zu entfernen. Die im Luftstrom freigesetzten Kontaminationen werden weiter vorzugsweise abgesaugt. Beim Reinigen durch einen Luftstrom werden also aktiv lose Partikel von der Oberfläche gelöst und die Partikel werden insbesondere durch eine Absaugvorrichtung aufgenommen und abtransportiert. Gerade die kontaktlose Reinigung durch einen Luftstrom erlaubt eine besonders schonende Reinigung der GDL-Oberfläche und eine Absaugvorrichtung verhindert eine Umverteilung von Partikeln. Das Reinigen der GDL erfolgt damit sehr effizient.

Eine weitere vorteilhafte Weiterbildung des Verfahrens sieht ein Absaugen von Verunreinigungen und/oder ein Entfernen von Verunreinigungen mittels einer adhäsiven Oberfläche und/oder ein Entfernen von Verunreinigungen durch elektrostatische Anziehung vor. Im ersten Fall spricht man dabei von Kontaktreinigung, während der zweite Fall eine weitere kontaktlose Reinigung betrifft.

Um eine sichere und besonders zuverlässige Übergabe der GDL vom ersten Vakuumtransportband auf das zweite Vakuumtransportband zu ermöglichen, ist vorteilhaft vorgesehen, dass eine Länge des Übergabebereichs, in dem sich das erste Vakuumtransportband und das zweite Vakuumtransportband gegenüberliegen und somit in vertikaler Richtung gesehen überlappen, also mit anderen Worten eine Länge des Überlappungsbereichs, größer oder gleich der Länge der Gasdiffusionslage in Längsmaschinenrichtung, also in Förderrichtung des ersten Vakuumtransportbands, ist. Die Länge des Übergabebereichs wird dabei in Bewegungsrichtung des ersten Vakuumtransportbands vom Beginn des Übergabebereichs bis zum Ende des Übergabebereichs gemessen.

Insbesondere wird, um einen zuverlässigen und sicheren Transport der GDL auf dem ersten Vakuumtransportband und auf dem zweiten Vakuumtransportband zu verbessern, die Stärke des Vakuums (Höhe des angelegten Unterdrucks) der Vakuumtransportbänder variabel eingestellt auf Größe, Flächengewicht, Porosität und Oberflächenrauigkeit sowie auf die Abstände bzw. Zwischenräume der einzelnen GDL in Förderrichtung und Quermaschinenrichtung der zu reinigenden GDL, so dass die GDL nicht von den Vakuumtransportbändern abfallen. Vorzugsweise wird dabei das Vakuum (bzw. der Unterdruck) des ersten und zweiten Vakuumtransportbands auf einen Bereich von -100 mbar bis -900 mbar und vorzugweise auf einen Bereich von -300 mbar bis -600 mbar eingestellt.

Weiterhin kann die Breite des Vakuums auf die Breite der GDL eingestellt werden, um sog. Leckageluft zu vermeiden und damit eine gute Vakuumqualität zu erreichen. Für diesen Zweck kann das Vakuum in den äußeren Bereichen des ersten und zweiten Vakuumtransportbands auch deaktiviert werden. Auch dies verbessert die Zuverlässigkeit des Transports der GDL, insbesondere im Bereich des zweiten Vakuumtransportbands.

Weiter vorteilhaft sind das Vakuum des ersten Vakuumtransportbands und des zweiten Vakuumtransportbands, also die anzulegenden Höhen des jeweiligen Unterdrucks, unabhängig voneinander einstellbar.

Ferner vorteilhaft ist vorgesehen, dass das Vakuum des ersten Vakuumtransportbands im Übergabebereich partiell unabhängig regelbar ist und im Übergabebereich am ersten Vakuumtransportband ein geringerer Unterdruck eingestellt wird als der Unterdruck des zweiten Vakuumtransportbands im Übergabebereich. Dies ermöglicht eine besonders schonende Übergabe der GDL vom ersten Vakuumtransportband auf das zweite Vakuumtransportband, insbesondere ohne die GDL zu biegen oder sogar zu schädigen.

Darüber hinaus kann das Vakuum des ersten Vakuumtransportbands im Übergabebereich gegenüber dem Vakuum des zweiten Vakuumtransportbands abgeschwächt werden. Diese vorteilhafte Weiterbildung erlaubt eine besonders zuverlässige Übergabe der GDL vom ersten Vakuumtransportband auf das zweite Vakuumtransportband und verhindert eine Beschädigung der GDL während der Übergabe.

Um eine besonders gute Reinigung der GDL bei gleichzeitig hohem Durchsatz zu ermöglichen, liegt die Bandgeschwindigkeit des ersten und/oder zweiten Vakuumtransportbands vorteilhafterweise im Bereich von 0,1 m/min bis 200 m/min, weiter bevorzugt von 0,1 m/min bis 50 m/min und noch weiter bevorzugt von 0,5 m/min bis 20 m/min. Durch ein Einstellen der Bandgeschwindigkeiten in den vorstehend genannten Bereichen, kann eine optimale Kombination aus zuverlässiger Reinigung und effizienter, d.h. schneller Prozessführung, erreicht werden.

In einer weiteren vorteilhaften Weiterbildung wird für das erste Vakuumtransportband eine geringere Bandgeschwindigkeit als die Bandgeschwindigkeit des zweiten Vakuumtransportbands eingestellt. Somit wird ein Verschieben, Verrutschen oder Beschädigen der GDL im Übergabebereich verhindert, was dann auftreten kann, wenn die Bandgeschwindigkeit des zweiten Vakuumtransportbands etwas langsamer als die Bandgeschwindigkeit des ersten Vakuumtransportbands ist.

Weiter vorteilhaft ist ein Abstand zwischen dem ersten Vakuumtransportband und dem zweiten Vakuumtransportband einstellbar und wird größer oder gleich der durchschnittlichen Dicke der GDL eingestellt. Somit wird zum einen eine Kompression der GDL verhindert, die die Funktionalität in der späteren Anwendung negativ beeinflussen kann, zum anderen wird eine zuverlässige Übergabe vom ersten Vakuumtransportband auf das zweite Vakuumtransportband erreicht. Um eine genaue Einstellung des Abstands zwischen erstem Vakuumtransportband und zweitem Vakuumtransportband vornehmen zu können, ist eine sehr gute Planparallelität zwischen erstem Vakuumtransportband und zweitem Vakuumtransport vorteilhaft. Sofern die durchschnittliche Dicke der GDL, die üblicherweise zwischen 100 µm und 300 µm liegt, ist ein Ausrichten des ersten und zweiten Vakuumtransportbands derart, dass eine Abweichung von der Planparallelität zwischen erstem Vakuumtransportband und zweitem Vakuumtransport von weniger als 10 µm ist, besonders vorteilhaft, um die GDL während des Verfahrens nicht zu beschädigen und einen sicheren und zuverlässigen Transport zu ermöglichen.

Ferner vorteilhaft kann das Verfahren einen Schritt des Analysierens der gereinigten GDL unter Verwendung eines Kamerasystems vorsehen. Dabei können im Kamerasystem Fehlerbilder wie Fasern, Kratzer, Risse, Brüche und dergleichen, hinterlegt und über das Kamerasystem erkannt werden. Entsprechend der Qualität der GDL können so genannte Gutteile separiert und für eine weitere Verarbeitung bevorratet werden. So genannte Schlechtteile können aussortiert und separiert werden.

Vorzugsweise wird die gereinigte Gasdiffusionslage in eine Bevorratungsvorrichtung überführt.

Insbesondere werden qualitativ gute GDL (Gutteile) vom zweiten Vakuumtransportband in eine erste Bevorratungsvorrichtung und eventuelle Ausschussteile (Schlechtteile) in eine zweite Bevorratungsvorrichtung übergeben.

Ferner vorteilhaft wird die gereinigte GDL vom zweiten Vakuumtransportband an ein weiteres Transportband übergeben und ggf. unter zusätzlicher Verwendung einer Greifvorrichtung vom weiteren Transportband in eine Bevorratungsvorrichtung überführt. Dies ermöglicht eine besonders gute und schnelle Bevorratung der gereinigten GDL ohne den Reinigungsprozess am ersten und zweiten Vakuumtransportband zu beeinflussen.

Weitere Einzelheiten, Vorteile und Merkmale der vorliegenden Erfindung ergeben sich aus nachfolgender Beschreibung von Ausführungsbeispielen anhand der Zeichnung.
- Fig. 1: veranschaulicht ein Verfahren zur Bereitstellung einer gereinigten Gasdiffusionslage für elektrochemische Anwendungen gemäß einer ersten Ausführungsform und
- Fig. 2: veranschaulicht ein Verfahren zur Bereitstellung einer gereinigten Gasdiffusionslage für elektrochemische Anwendungen gemäß einer zweiten Ausführungsform.

In den Figuren sind nur die wesentlichen Merkmale der Erfindung dargestellt. Alle übrigen Merkmale sind der Übersichtlichkeit halber weggelassen. Ferner beziffern gleiche Bezugszeichen gleiche Bauteile.

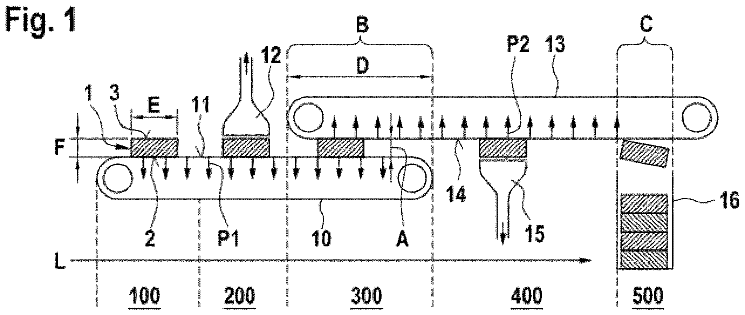

Im Detail veranschaulicht Figur 1 Verfahrensschritte zur Bereitstellung einer gereinigten Gasdiffusionslage für elektrochemische Anwendungen.

Zunächst wird im Verfahrensschritt 100 eine GDL 1 bereitgestellt. Die GDL weist eine erste Seite 2 und eine der ersten Seite 2 gegenüberliegende zweite Seite 3 auf. Die GDL 1 wird derart bereitgestellt, dass die erste Seite 2 der GDL 1 auf einem ersten Vakuumtransportband 10 angeordnet wird und sodann mit einer Oberfläche 11 des ersten Vakuumtransportbands 10 in Kontakt steht. Die der ersten Seite 2 der GDL 1 gegenüberliegende zweite Seite 3 liegt indes frei.

Ein Abfallen der GDL 1 vom ersten Vakuumtransportband 10 wird verhindert und damit auch ein sicherer Transport der GDL 1 auf dem ersten Vakuumtransportband 10 gewährleistet, indem die GDL 1 mit ihrer ersten Seite 2 auf der Oberfläche 11 des ersten Vakuumtransportbands 10 mittels Unterdruck, veranschaulicht durch die Pfeile P1, angesaugt wird. Die GDL 1 wird in Längsmaschinenrichtung L, also der Förderrichtung des ersten Vakuumtransportbands 10, auf der Oberfläche 11 des ersten Vakuumtransportbands 10 zu einer ersten Reinigungsvorrichtung 12 transportiert, wo ein Reinigen 200 der zweiten Seite 3 der GDL 1, z.B. durch kontaktlose Reinigung mittels eines Luftstroms mit oder ohne Ionisierung und ggf. anschließender Absaugung von kontaminierter Luft, stattfindet.

Die GDL 1 wird auf der Oberfläche 11 des ersten Vakuumtransportbands 10 weitertransportiert zu einem Übergabebereich B. Im Übergabebereich B erfolgt ein Übergeben 300 der teilgereinigten GDL 1 an ein dem ersten Vakuumtransportband 10 teilweise gegenüberliegendes zweites Vakuumtransportband 13. Der Übergabebereich B entspricht einem Überlappungsbereich in Längsmaschinenrichtung L des ersten und des zweiten Vakuumtransportbands 10, 13. Die Übergabe der GDL 1 erfolgt dabei so, dass die erste Seite 2 der GDL 1 nun frei liegt und die zweite, bereits gereinigte Seite 3 der GDL 1 mit einer Oberfläche 14 des zweiten Vakuumtransportbands 13 in Kontakt gelangt und an der Oberfläche 14 durch Unterdruck, was durch die Pfeile P2 veranschaulicht wird, angesaugt wird.

Die GDL 1 wird sodann auf dem zweiten Vakuumtransportband 13 weiter in Längsmaschinenrichtung L zu einer zweiten Reinigungsvorrichtung 15, die wie die erste Reinigungsvorrichtung 12 ausgebildet sein kann, transportiert. Hier erfolgt ein Reinigen 400 der freiliegenden ersten Seite 2 der GDL 1. Die GDL 1 wird weitertransportiert zu einem Ablegebereich C, in dem die GDL 1 in eine Bevorratungsvorrichtung 16 übergeben und in Verfahrensschritt 500 bevorratet wird. Dies ist insbesondere dann sehr einfach möglich, wenn im Ablegebereich C der Unterdruck am zweiten Vakuumtransportband 13 soweit reduziert wird, dass die GDL 1 von selber in die Bevorratungsvorrichtung 16 gelangt.

Der Unterdruck des ersten Vakuumtransportbands 10 und des zweite Vakuumtransportbands 13 sind zur Ausführung des Verfahrens vorzugsweise unabhängig voneinander einstellbar und auch innerhalb eines Vakuumtransportbands 10, 13, partiell variabel einstellbar. Insbesondere wird das Vakuum (also der Unterdruck) des ersten und zweiten Vakuumtransportbands 10, 13 auf einen Bereich von -100 mbar bis -900 mbar und vorzugweise auf einen Bereich von -300 mbar bis -600 mbar eingestellt, wobei das Vakuum des ersten Vakuumtransportbands 10 im Übergabebereich B partiell unabhängig regelbar ist und im Übergabebereich B ein geringerer Unterdruck eingestellt wird als der Unterdruck des zweiten Vakuumtransportbands 13 im Übergabebereich B. Hierdurch wird eine besonders einfache und sichere Übergabe der GDL 1 vom ersten Vakuumtransportband 10 an das zweite Vakuumtransportband 13 ermöglicht, ohne dass es zu Beschädigungen der GDL 1 kommt.

Wie ferner aus Figur 1 zu erkennen ist, ist die Länge D des Übergabebereichs B, in dem sich das erste Vakuumtransportband 10 und das zweite Vakuumtransportband 13 gegenüberliegen (Überlappungsbereich), größer als die Länge E der GDL 1, jeweils in Förderrichtung des ersten Vakuumtransportbands 10 (Längsmaschinenrichtung L) gesehen. Dies ermöglicht ebenfalls eine sehr sichere und zerstörungsfreie Übergabe der GDL 1 vom ersten Vakuumtransportband 10 an das zweite Vakuumtransportband 13.

Die Bandgeschwindigkeit des ersten und/oder zweiten Vakuumtransportbands 10, 13 liegt ferner insbesondere im Bereich von 0,1 m/min bis 200 m/min, weiter bevorzugt von 0,1 m/min bis 50 m/min und noch weiter bevorzugt von 0,5 m/min bis 20 m/min, wobei das erste Vakuumtransportband 10 vorzugsweise eine geringere Bandgeschwindigkeit als das zweite Vakuumtransportband 13 aufweist, so dass ein reibungsloser Prozess ohne Anstauung der GDL 1 ermöglicht wird.

Um weiterhin Schäden durch Kompression der GDL 1 zu verhindern und gleichzeitig einen guten und sicheren Transport der GDL 1 auf den Vakuumtransportbändern 10, 13 sowie auch eine optimale Übergabe im Übergabebereich B zu fördern, wird ein Abstand A zwischen dem ersten Vakuumtransportband 10 und dem zweiten Vakuumtransportband 13 so eingestellt, dass er größer oder gleich der durchschnittlichen Dicke F der GDL 1 ist.

Das in Figur 1 dargestellte Verfahren ermöglicht das Reinigen der GDL 1 von beiden Seiten 2, 3 in einer kontinuierlichen und sehr schnellen Verfahrensführung ohne die GDL 1 zu drehen oder zu beschädigen. Insbesondere da bei der Übergabe der GDL 1 vom ersten Vakuumtransportband 10 auf das zweite Vakuumtransportband 13 keine Drehung der GDL 1 oder ein Bewegen der GDL 1 mit einem Greifer erfolgt, ist die hier gezeigte Verfahrensführung besonders schonend. Daher ist das Verfahren besonders effizient, kostengünstig und ressourcenschonend. Gleichzeitig ermöglicht das Verfahren ein sicheres und zuverlässiges Handhaben der GDL 1, wodurch GDL 1 in besonders guter Qualität, d.h. mit zuverlässiger Reinigung und ohne Beschädigung, erhalten werden.

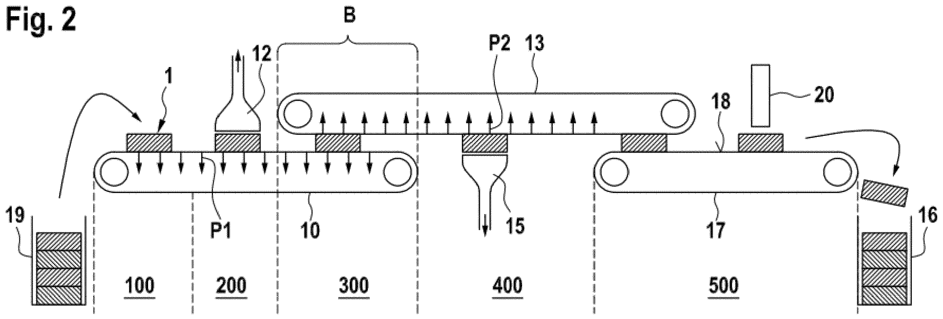

Im Detail veranschaulicht Figur 2 Verfahrensschritte zur Bereitstellung einer gereinigten Gasdiffusionslage für elektrochemische Anwendungen gemäß einer zweiten Ausführungsform. Im Unterschied zu dem durch Figur 1 veranschaulichten Verfahren wird in Figur 2 zusätzlich gezeigt, dass die GDL 1 zum Bereitstellen aus einer weiteren Bevorratungsvorrichtung 19 entnommen werden. Die Verfahrensschritte Transport und Reinigung 200 der zweiten Seite 2 der GDL 1 durch die erste Reinigungsvorrichtung 12 auf dem ersten Vakuumtransportband 10 sowie die Übergabe 300 im Übergabebereich B an das zweite Vakuumtransportband 13 und auch die Reinigung 400 der ersten Seite 3 der GDL 1 durch die zweite Reinigungsvorrichtung 15 am zweiten Vakuumtransportband 13 entsprechen denjenigen aus Figur 1.

Als weiterer Unterschied ist jedoch ein zusätzliches Transportband 17 vorgesehen. Transportband 17 kann, muss aber nicht, als Vakuumtransportband ausgeführt sein. Es dient lediglich der Beförderung der vollständig gereinigten GDL 1 auf der Oberfläche 18 des Transportbands 17 vom zweiten Vakuumtransportband 13 zur Bevorratungsvorrichtung 16. Diese Verfahrensführung ist besonders von Vorteil, wenn ein Kamerasystem 20 vorgesehen ist, mittels dessen etwaige Defekte in der GDL 1 erkannt werden können, so dass die Bevorratung 500 auch in unterschiedliche Bevorratungsvorrichtungen 16 vorgenommen werden kann, beispielsweise für Gutteile in eine erste Bevorratungsvorrichtung und für Schlechtteile in eine zweite Bevorratungsvorrichtung.

Es werden dieselben Vorteile, wie für die in Figur 1 dargelegte Verfahrensführung erhalten.

Neben der vorstehenden schriftlichen Beschreibung der Erfindung wird zu deren ergänzender Offenbarung hiermit explizit auf die zeichnerische Darstellung der Erfindung in den Fig. 1 und 2 Bezug genommen.

### Bezugszeichenliste

- 1: GDL
- 2: erste Seite der GDL
- 3: zweite Seite der GDL
- 10: erstes Vakuumtransportband
- 11: Oberfläche des ersten Vakuumtransportbands
- 12: erste Reinigungsvorrichtung
- 13: zweites Vakuumtransportband
- 14: Oberfläche des zweiten Vakuumtransportbands
- 15: zweite Reinigungsvorrichtung
- 16: Bevorratungsvorrichtung
- 17: Transportband
- 18: Oberfläche des Transportbands
- 19: Bevorratungsvorrichtung
- 20: Kamerasystem
- A: Abstand des ersten und zweiten Vakuumtransportbands
- B: Übergabebereich
- C: Ablegebereich
- D: Länge des Übergabebereichs
- E: Länge der GDL
- F: durchschnittliche Dicke der GDL
- L: Längsmaschinenrichtung

## Patentansprüche

1. Verfahren zur Bereitstellung einer gereinigten Gasdiffusionslage (1) für elektrochemische Anwendungen umfassend die Schritte:
- Bereitstellen (100) einer Gasdiffusionslage (1) derart, dass eine erste Seite (2) der Gasdiffusionslage (1) auf einem ersten Vakuumtransportband (10) angeordnet wird,
- Reinigen (200) einer der ersten Seite (2) der Gasdiffusionslage (1) gegenüberliegenden, freiliegenden zweiten Seite (3) der Gasdiffusionslage (1),
- Übergeben (300) der teilgereinigten Gasdiffusionslage (1) an ein dem ersten Vakuumtransportband (10) teilweise gegenüberliegendes zweites Vakuumtransportband (13), wobei das erste Vakuumtransportband (10) und das zweite Vakuumtransportband (13) einen Übergabebereich (B) aufweisen, in dem die Gasdiffusionslage (1) vom ersten Vakuumtransportband (10) an das zweite Vakuumtransportband (13) übergeben wird, so dass die erste Seite (2) der Gasdiffusionslage (1) frei liegt und
- Reinigen (400) der ersten Seite (2) der Gasdiffusionslage (1).

2. Verfahren nach Anspruch 1, wobei Rohmaterial-Gasdiffusionslagen in Form einer Rollenware (30) vorliegen, die zu Gasdiffusionslagen (1) vereinzelt werden.

3. Verfahren nach einem der vorhergehenden Ansprüche, wobei zum Reinigen (200, 400) ein Luftstrom an die zu reinigende Seite (2, 3) der Gasdiffusionslage (1) geführt und insbesondere auch abgesaugt wird.

4. Verfahren nach einem der vorhergehenden Ansprüche, ferner umfassend ein Absaugen von Verunreinigungen und/oder ein Entfernen von Verunreinigungen mittels einer adhäsiven Oberfläche und/oder ein Entfernen von Verunreinigungen durch elektrostatische Anziehung.

5. Verfahren nach einem der vorhergehenden Ansprüche, wobei eine Länge (D) des Übergabebereichs (B) größer oder gleich der Länge (E) der Gasdiffusionslage (1) ist und/oder
wobei das Vakuum des ersten Vakuumtransportbands und des zweiten Vakuumtransportbands (10, 13) auf einen Bereich von -100 mbar bis -900 mbar, vorzugweise auf einen Bereich von -300 mbar bis -600 mbar eingestellt wird und/oder wobei das Vakuum des ersten Vakuumtransportbands (10) und des zweiten Vakuumtransportbands (13) unabhängig voneinander einstellbar sind und/oder
wobei das Vakuum des ersten Vakuumtransportbands (10) im Übergabebereich (B) partiell unabhängig regelbar ist und im Übergabebereich (B) ein geringerer Unterdruck eingestellt wird als der Unterdruck des zweiten Vakuumtransportbands (13) im Übergabebereich (B) und/oder
wobei die Bandgeschwindigkeit des ersten und/oder zweiten Vakuumtransportbands (10, 13) im Bereich von 0,1 m/min bis 200 m/min, bevorzugt im Bereich von 0,1 m/min bis 50 m/min, und weiter bevorzugt im Bereich von 0,5 m/min bis 20 m/min liegt und/oder
wobei das erste Vakuumtransportband (10) eine geringere Bandgeschwindigkeit als das zweite Vakuumtransportband (13) aufweist.

6. Verfahren nach einem der vorhergehenden Ansprüche, wobei ein Abstand (A) zwischen dem ersten Vakuumtransportband (10) und dem zweiten Vakuumtransportband (13) einstellbar ist und größer oder gleich der durchschnittlichen Dicke (F) der GDL (1) eingestellt wird.

7. Verfahren nach einem der vorhergehenden Ansprüche, ferner umfassend einen Schritt des Analysierens der gereinigten Gasdiffusionslage (1) unter Verwendung eines Kamerasystems (20).

8. Verfahren nach einem der vorhergehenden Ansprüche, wobei die gereinigte Gasdiffusionslage (1) in eine Bevorratungsvorrichtung (16) überführt wird und/oder
wobei die gereinigte Gasdiffusionslage (1) vom zweiten Vakuumtransportband (30) an ein Transportband (17) übergeben und vom Transportband (17) in eine Bevorratungsvorrichtung (16) überführt wird.

## Claims

1. A method for providing a cleaned gas diffusion layer (1) for electrochemical applications, comprising the steps:
- providing (100) a gas diffusion layer (1) such that a first side (2) of the gas diffusion layer (1) is arranged on a first vacuum conveyor belt (10),
- cleaning (200) an exposed second side (3) of the gas diffusion layer (1), said second side being situated opposite the first side (2) of the gas diffusion layer (1),
- transferring (300) the partially cleaned gas diffusion layer (1) to a second vacuum conveyor belt (13) that is partially situated opposite the first vacuum conveyor belt (10), wherein the first vacuum conveyor belt (10) and the second vacuum conveyor belt (13) have a transfer region (B) in which the gas diffusion layer (1) is transferred from the first vacuum conveyor belt (10) to the second vacuum conveyor belt (13), such that the first side (2) of the gas diffusion layer (1) is exposed, and
- cleaning (400) the first side (2) of the gas diffusion layer (1).

2. The method as claimed in claim 1, wherein raw material gas diffusion layers are provided in the form of roll stock (30) that is singularized to form gas diffusion layers (1).

3. The method as claimed in either one of the preceding claims, wherein, for the purposes of cleaning (200, 400), an air stream is conducted to that side (2, 3) of the gas diffusion layer (1) which is to be cleaned, and is in particular also extracted by suction.

4. The method as claimed in any one of the preceding claims, furthermore comprising extraction of contaminants by suction and/or removal of contaminants by means of an adhesive surface and/or removal of contaminants by electrostatic attraction.

5. The method as claimed in any one of the preceding claims, wherein a length (D) of the transfer region (B) is greater than or equal to the length (E) of the gas diffusion layer (1), and/or
wherein the vacuum of the first vacuum conveyor belt and of the second vacuum conveyor belt (10, 13) is set to a range from -100 mbar to -900 mbar, preferably to a range from -300 mbar to -600 mbar, and/or wherein the vacuum of the first vacuum conveyor belt (10) and that of the second vacuum conveyor belt (13) are settable independently of one another, and/or
wherein the vacuum of the first vacuum conveyor belt (10) is controllable partially independently in the transfer region (B), and a negative pressure that is set in the transfer region (B) is smaller than the negative pressure of the second vacuum conveyor belt (13) in the transfer region (B), and/or
wherein the belt speed of the first and/or second vacuum conveyor belt (10, 13) lies in the range from 0.1 m/min to 200 m/min, preferably in the range from 0.1 m/min to 50 m/min, and furthermore preferably in the range from 0.5 m/min to 20 m/min, and/or
wherein the first vacuum conveyor belt (10) has a lower belt speed than the second vacuum conveyor belt (13).

6. The method as claimed in any one of the preceding claims, wherein a spacing (A) between the first vacuum conveyor belt (10) and the second vacuum conveyor belt (13) is settable, and is set to be greater than or equal to the average thickness (F) of the GDL (1).

7. The method as claimed in any one of the preceding claims, furthermore comprising a step of analyzing the cleaned gas diffusion layer (1) using a camera system (20).

8. The method as claimed in any one of the preceding claims, wherein the cleaned gas diffusion layer (1) is transferred into a storage device (16), and/or
wherein the cleaned gas diffusion layer (1) is transferred from the second vacuum conveyor belt (30) to a conveyor belt (17), and is transferred from the conveyor belt (17) into a storage device (16).

## Revendications

1. Procédé pour fournir une couche de diffusion de gaz (1) nettoyée pour des applications électrochimiques, comprenant les étapes :
- de fourniture (100) d'une couche de diffusion de gaz (1) de telle manière qu'un premier côté (2) de la couche de diffusion de gaz (1) est disposé sur une première bande de transport sous vide (10),
- de nettoyage (200) d'un deuxième côté (3), de la couche de diffusion de gaz (1), dégagé faisant face au premier côté (2) de la couche de diffusion de gaz (1),
- de transfert (300) de la couche de diffusion de gaz (1) partiellement nettoyée sur une deuxième bande de transport sous vide (13) faisant face en partie à la première bande de transport sous vide (10), dans lequel la première bande de transport sous vide (10) et la deuxième bande de transport sous vide (13) présentent une zone de transfert (B), dans laquelle la couche de diffusion de gaz (1) est transférée depuis la première bande de transport sous vide (10) à la deuxième bande de transport sous vide (13) de telle sorte que le premier côté (2) de la couche de diffusion de gaz (1) est dégagé, et
- de nettoyage (400) du premier côté (2) de la couche de diffusion de gaz (1).

2. Procédé selon la revendication 1, dans lequel des couches de diffusion de gaz en matériau brut sont présentes sous la forme d'une marchandise en rouleaux (30), qui est isolée en couches de diffusion de gaz (1).

3. Procédé selon l'une quelconque des revendications précédentes, dans lequel un flux d'air est guidé sur le côté (2, 3) à nettoyer de la couche de diffusion de gaz (1) et est en particulier également évacué par aspiration pour le nettoyage (200, 400).

4. Procédé selon l'une quelconque des revendications précédentes, comprenant en outre une évacuation par aspiration d'impuretés et/ou une élimination d'impuretés au moyen d'une surface adhésive et/ou une élimination d'impuretés par attraction électrostatique.

5. Procédé selon l'une quelconque des revendications précédentes, dans lequel une longueur (D) de la zone de transfert (B) est supérieure ou égale à la longueur (E) de la couche de diffusion de gaz (1),
et/ou
dans lequel le vide de la première bande de transport sous vide et de la deuxième de transport sous vide (10, 13) est réglé sur une plage de -100 mbar à - 900 mbar, de préférence sur une plage de -300 mbar à -600 mbar, et/ou
dans lequel le vide de la première bande de transport sous vide (10) et de la deuxième bande de transport sous vide (13) peuvent être réglés indépendamment l'un de l'autre, et/ou
dans lequel le vide de la première bande de transport sous vide (10) peut être régulé en partie de manière indépendante dans la zone de transfert (B), et une dépression inférieure à la dépression de la deuxième bande de transport sous vide (13) dans la zone de transfert (B) est réglée dans la zone de transfert (B), et/ou
dans lequel la vitesse de bande de la première et/ou de la deuxième bande de transport sous vide (10, 13) se situe dans la plage de 0,1 m/min à 200 m/min, de manière préférée dans la plage de 0,1 m/min à 50 m/min, et par ailleurs de manière préférée dans la plage de 0,5 m/min à 20 m/min, et/ou
dans lequel la première bande de transport sous vide (10) présente une vitesse de bande inférieure à la deuxième bande de transport sous vide (13).

6. Procédé selon l'une quelconque des revendications précédentes, dans lequel une distance (A) entre la première bande de transport sous vide (10) et la deuxième bande de transport sous vide (13) peut être réglée et est réglée de manière à être supérieure ou égale à l'épaisseur moyenne (F) de la couche de diffusion de gaz (1).

7. Procédé selon l'une quelconque des revendications précédentes, comprenant en outre une étape de l'analyse de la couche de diffusion de gaz (1) nettoyée en utilisant un système de caméra (20).

8. Procédé selon l'une quelconque des revendications précédentes, dans lequel la couche de diffusion de gaz (1) nettoyée est amenée dans un dispositif d'approvisionnement (16), et/ou
dans lequel la couche de diffusion de gaz (1) nettoyée est transférée depuis la deuxième bande de transport sous vide (30) à une bande de transport (17) et est amenée par la bande de transport (17) dans un dispositif d'approvisionnement (16).
